# EUROPEAN PATENT APPLICATION

(11) **EP 1 112 810 A1**
(43) Date of publication of application: **04.07.2001**
(21) Application number: 99935063.0
(22) Date of filing: 05.08.1999
(51) Int. Cl.: B23Q 17/00, B23Q 17/09, H04B 15/00, H04B 7/12, H04B 1/10

(54) **MACHINE TOOL AND METHOD OF COMMUNICATION**

(30) Priority: 08.08.1998 JP 25746398
(71) Applicant: NT Engineering Kabushiki Kaisha, Takahama-shi, Aichi-ken 444-1335 (JP); Masuda, Yukio, Ichikawa-shi, Chiba-ken 272-0114 (JP)
(72) Inventor: MASUDA, Yukio, Ichikawa-shi, Chiba 272-0114 (JP); KOMAI, Yasuhiro c/oNT Engineering Kabushiki Kaisha, Takahama-shi, Aichi 444-1335 (JP)
(74) Representative: Borchert, Uwe Rudolf, Dipl.-Ing.
(86) International application number: JP9904221
(87) International publication number: WO0007767

(57) **Abstract**

A machine tool comprising:
a holder to which a tool is fixed;
a transmission/reception device provided in said holder; and
a controller electromagnetically carrying out radio communication with said transmission/reception device: wherein
a reception device is provided with
an oscillation circuit simultaneously generating a plurality of carrier waves each having a distinct frequency;
a modulation circuit modulating signal waves on said plurality of carrier waves; and
a first antenna transmitting to a reception device a plurality of electromagnetic waves each modulating said signal waves on one of said plurality of carrier waves: and wherein
said reception device is provided with a second antenna receiving each of said electromagnetic waves transmitted; and
a gate switch permitting said signal waves to be judged only when said plurality of carriers are simultaneously received.

## Description

### Technical Field of the Invention

This invention relates to a machine tool wherein a holder in which is mounted a tool is externally controlled and to a method of communication therefor.

### Background Art

In the case of a machine such as a machining center, it is normal practice to automatically replace various tools (implements) by means of an automatic tool changer (ATC). A machine comprising a holder that is equipped with a so-called ATC shank is used in this type of replacement work. A generally adopted arrangement is such that the above-mentioned holder is automatically mounted on and removed from a spindle.

In connection with the above, it is necessary to accurately adjust the position of the blade of a tool in order for high-precision work such as boring to be carried out by means of the above-mentioned machine. As a matter of fact, it is true that the position of the blade of the tool is preset in accordance with machining dimensions, but presetting errors are present. Such being the case, when a worn blade is replaced, trial machining is first carried out, then the position of the blade of the tool is accurately adjusted on the basis of the trial machining results, and thereafter actual machining work is started.

Furthermore, in the event that the machining accuracy required is higher than the ATC accuracy, then machining work cannot be started immediately after the tool is replaced automatically, since errors are involved on account of replacement work carried out by means of the ATC. Therefore, by way of preliminary machining, a workpiece is machined to a diameter slightly smaller than the desired machined diameter, then the position of the tool is adjusted starting with preliminarily machined dimensions, and thereafter the workpiece is machined to the desired dimensions.

In this regard, tool blade position adjustment work mentioned above depends on the manual work of an operator, since the pertinent adjustment needs to be performed with an accuracy of microns. Namely, the operator adjusts the tool blade by resorting to his delicate manual feel while watching a dial indicator graduated in microns, and thus a problem is pointed out in that this type of adjustment work is considerably troublesome and time-consuming.

Such being the case, it is desired that fine adjustment of the tool blade should be carried out automatically by a mechanism included in the holder. By way of an example of an embodiment of the above, a method is conceivable whereby the holder includes:
a driving source such as an electric motor;
an adjustment device in which this driving source is used to universally vary tool blade positions; and
a radio communication apparatus: such that
the above-mentioned adjustment device is driven and controlled through radio communication performed by means of an external controller, thus carrying out fine adjustment of tool blade positions.

However, a machine such as a machining center, which is used in a machining factory, is exposed to a large quantity of noise (disturbances) produced by sources such as various electric motors, relays, or electric wiring. Therefore, radio communication between the holder and the controller are affected by the noise, thereby presenting a problem in that high-precision work cannot be carried out smoothly.

In this connection, it is conceivable to use communication frequencies such that noise frequencies are avoided. However, it is difficult to detect the noise in a reliable manner, since some noise is produced continuously, and some noise is generated sporadically. This being so, usable frequency ranges are extremely limited, and there is a possibility that in some cases, no usable frequencies are available. In this regard, it is conceivable to increase the output of electromagnetic waves used, thereby raising the S/N ratio. However, this approach is inappropriate in that the limits of "extremely-low-power radio waves" as prescribed by the Wireless Telegraphy Act are exceeded.

The present invention seeks to solve this problem. Accordingly, it is an object of the present invention to provide a machine tool capable of reliably precluding the effect of disturbances, thereby carrying out radio communication between a holder and an external controller with high accuracy, as well as a method of communication therefor.

### Disclosure of the Invention

Radio communication is carried out by means of electromagnetic waves between a controller and a transmission/reception device provided in a holder to which a tool is fixed. In this regard, a transmitter transmits to a receiver a plurality of electromagnetic waves which are simultaneously generated by an oscillation circuit and each of which is a carrier wave, having a distinct frequency, on which given signal waves are modulated. On the other hand, a receiver receives the transmitted electromagnetic waves and pass judgment on signal waves only when a plurality of carrier waves are received simultaneously.

For this purpose, a gate is opened only when a plurality of carrier waves are inputted simultaneously through radio communication carried out by means of a plurality of carrier waves, thereby reliably precluding erroneous operation without being affected by disturbances, thus leading to improved reliability. In this connection, operational conditions of the holder are detected by means of a detection device included in the holder, then pertinent detection signal waves are modulated on a plurality of carrier waves and are transmitted to the controller. In the controller, therefore, it is possible to accurately judge operational conditions of the holder.

Furthermore, a crystal resonator is provided in the oscillation circuit. The above-mentioned crystal resonator has a fundamental frequency, which is an undamped natural frequency, and besides, by way of characteristics, the crystal resonator also has a plurality of frequencies that are equal to the above-mentioned fundamental frequency multiplied by integers (frequencies of higher harmonic waves). For this reason, a fundamental carrier wave having a fundamental frequency and a plurality of carrier waves having higher harmonic frequencies can be taken out of a single crystal resonator. Furthermore, it is possible for the crystal resonator to oscillate stable carrier waves. However, even in the case of such a crystal oscillator, temperature variations cause oscillation frequencies to vary. In this regard, extremely stable oscillation frequencies can be obtained by providing the oscillation circuit with a reverse characteristics circuit, whose characteristics are reverse to the frequency characteristics of the crystal resonator used in the oscillating circuit. A temperature compensation capacitor is an example of such a reverse characteristics circuit.

Furthermore, the holder is provided with a correction head or a measurement head. Through radio communication carried out by means of a controller, it is possible to automatically detect the tool position as adjusted by means of such a correction head or the workpiece machined dimensions as measured by means of such a measurement head.

### Brief Description of the Drawings

FIG. 1 is an overall perspective view of a machine tool relating to the first embodiment of the present invention.

FIG. 2 is a longitudinal sectional illustration of a tool holder that is a component of a machine tool relating to the above-mentioned first embodiment.

FIG. 3 is a block diagram of circuits for a transmission/reception device included in the above-mentioned tool holder.

FIG. 4 is an illustration of an oscillation circuit that is a component of the above-mentioned transmission/reception device.

FIG. 5 is an illustration of oscillation characteristics and reverse characteristics of the above-mentioned oscillation circuit.

FIG. 6 is a block diagram of a controller that is a component of a machine tool relating to the above-mentioned first embodiment.

FIG. 7 is a longitudinal sectional illustration of a tool holder that is a component of a machine tool relating to the second embodiment of the present invention.

### Best Configurations for Carrying out the Invention

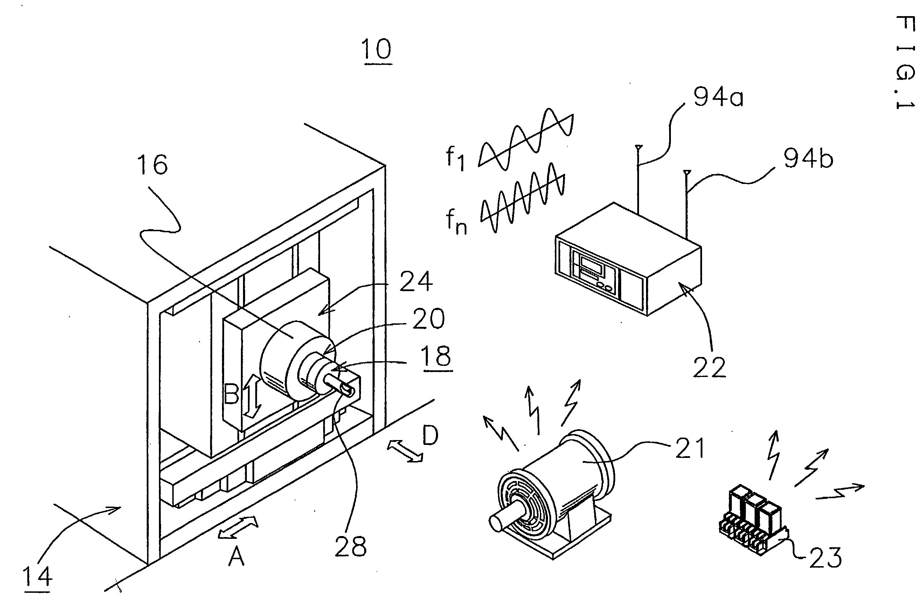

FIG. 1 is an overall perspective view of a machine tool relating to the first embodiment of the present invention.

The above-mentioned machine tool 10 comprises a cutting machine 14, a tool holder (a holder) 18 that can be readily mounted on and removed from a spindle 16 of the above-mentioned cutting machine 14, a transmission/reception device 20, and a controller 22 that carries out radio communication with the transmission/reception device 20 by means of electromagnetic waves. Articles such as an electric motor 21 and a relay 23 are placed in a machining factory where the cutting machine 10 is used.

A spindle 16 is linked to a rotary driving source that is not shown, and is supported by a movable base 24 in such a way that rotation is permitted. Moreover, the above-mentioned spindle 16 is capable of moving freely in the direction of the arrow A (horizontally), in the direction of the arrow B (vertically), and in the direction of the arrow C (axially).

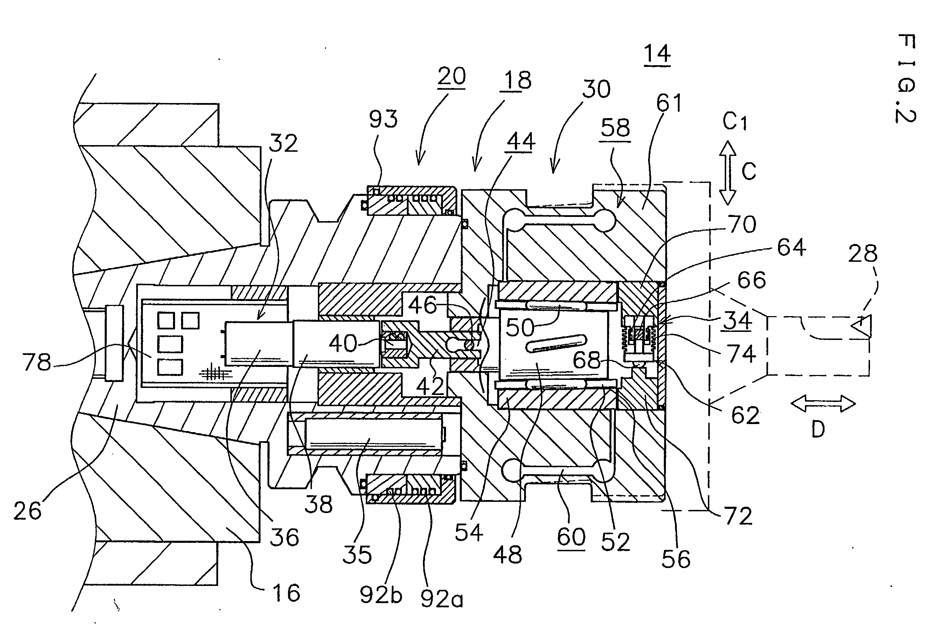

As shown in FIG. 2, a tool holder 18 has, at one end, a shank portion 26 that is fitted into the spindle 16. At the other end of the above-mentioned tool holder 18 is mounted a cutting tool 28 (by way of a tool). The tool holder 18 comprises a correction head 30 capable of adjusting the position of the cutting tool 28 in the radial direction of the spindle 16 (in the direction of the arrow C), a driving device 32 for driving the correction head 30, a detection device 34 for detecting the position as adjusted by the above-mentioned correction head 30, and a battery (DC power supply) 35.

The driving device 32 has a DC electric motor 36 which is included in the tool holder 18 and which is capable of normal and reverse rotations. A speed reducer 38 is linked to the driving shaft 38 of the DC electric motor 36. The speed reduction ratio of the speed reducer 38 is set at a high value. A driving adapter 42 is linked to an output shaft 40 of the speed reducer 38. A slit 44, which extends axially (in the direction of the arrow D), is formed at one end of the driving adapter 42. A conical tapered driving shaft 48 engages with the slit 44 by means of a pin 46 in such a way that the conical tapered driving shaft 48 is permitted to advance and retract freely. On the exterior peripheral surface of the tapered driving shaft 48 are placed a plurality of slightly inclined rollers 50, with a cage 52 serving as a retainer, in such a way that the rollers 50 are permitted to roll freely. On the outside of the above-mentioned rollers 50 is provided a power unit 54.

On the interior peripheral surface of the power unit 54 is formed a tapered surface 56 that corresponds to the exterior peripheral surface of the tapered driving shaft 48. On the other hand, the diameter of the exterior peripheral surface of the power unit 54 is so established as to be constant along the axis (namely, the power unit 54 has an axially straight exterior peripheral surface). At each end of the power unit 54 are provided a pair of slits (not shown) that are close to each other. When the tapered driving shaft 48 is caused to rotate, the tapered driving shaft 48 and the rollers 50 move in the longitudinal direction while rotating, thereby permitting the power unit 54 to expand and contract radially within given limits.

On the exterior periphery of the power unit is placed a head housing 58, which is approximately cylindrical and on whose exterior peripheral surface is formed an S-shaped slit 60. The head housing 58 has a movable portion 61. When the above-mentioned power unit 54 expands radially, the movable portion 61 is pressed radially outward, thereby being displaced in the direction of the arrow C1 with flexibility provided by the S-shaped slit 60. The cutting tool 28 is mounted on the movable portion 61.

The detection device 34 comprises a displacement detection sensor (a linear sensor) 62 for detecting corrected displacements of the head housing 58 in the direction of the arrow C. As shown in FIG. 2, the detection sensor 62 has a coil 64. A measuring core 66 is placed in the above-mentioned coil 64 in such a way that the measuring core 66 is permitted to freely advance and retract. The above-mentioned measuring core 66 is placed on a contact portion 68, and the coil 64 is screwed to one of a pair of expansion/contraction members of the power unit 54 with a fixing member 70 interposed in-between. A sensor pressing portion 72 is screwed to the rest of the pair of expansion/contraction members of the power unit 54 such that the sensor pressing portion 72 faces the contact portion 68. The above-mentioned contact portion 68, the aforementioned sensor pressing portion 72, and above-described head housing move as one body in the direction of the arrow C, with the contact portion 68 and the sensor pressing portion 72 kept pressed against each other at all times.

One end of a metal bellows capsule 74 is fixed to the contact portion 68. The coil 64 is covered with the bellows capsule 74. The function of the bellows capsule 74 is to waterproof the entire detection device 34. In place of the bellows capsule 74, other members such as a cylinder having O-rings or a rubber cover may be adopted provided that the pertinent purpose can be achieved.

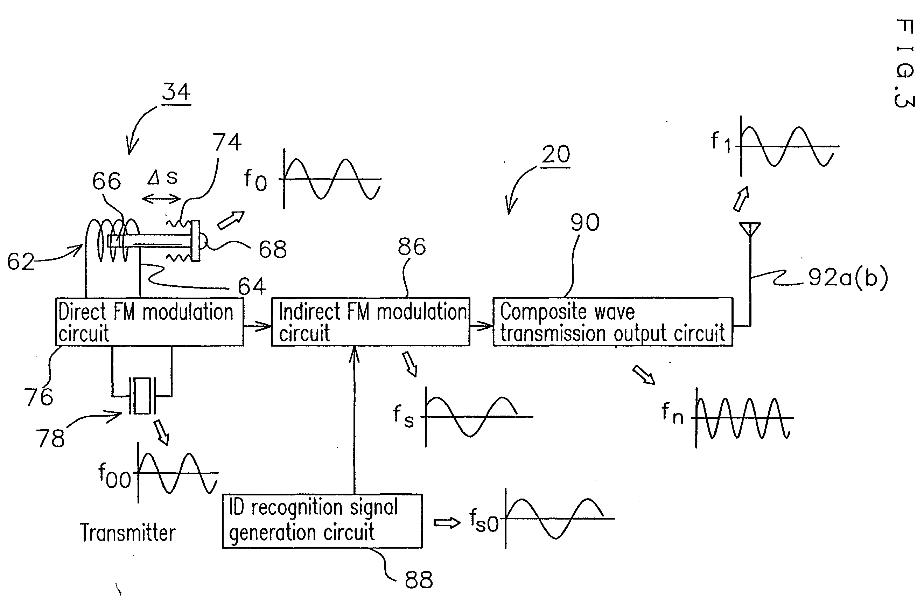

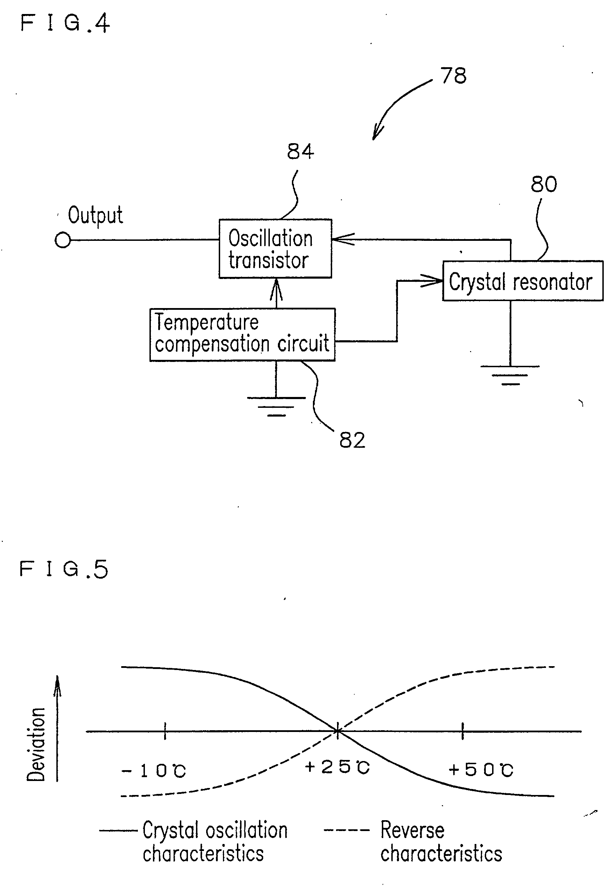

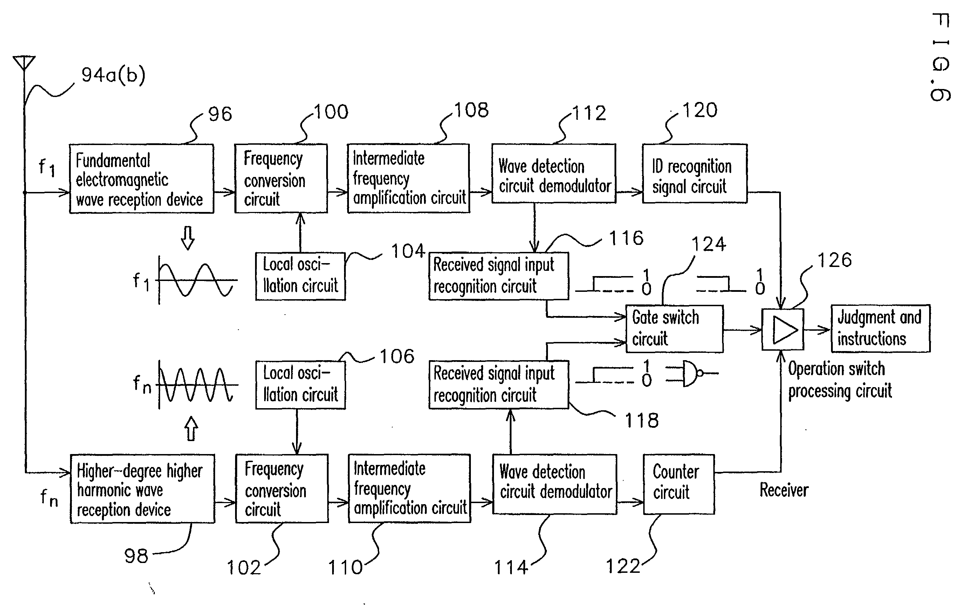

As shown in FIG. 3, the coil 64 of the sensor 62 is connected to a direct FM modulation circuit 76. Moreover, an oscillation circuit 78 is connected to the above-mentioned direct FM modulation circuit 76. As shown in FIG. 4, the oscillation circuit 78 comprises a crystal resonator 80, a temperature compensation circuit 82, and an oscillation transistor 84. The crystal resonator 80 simultaneously generates two carrier waves, since the crystal resonator 80 has a fundamental frequency, which is an undamped natural frequency, and a frequency that is equal to the above-mentioned fundamental frequency multiplied by an integer (a frequency of a higher harmonic wave). As shown in FIG. 5, a temperature compensation circuit 82 comprises a reverse characteristics circuit, whose characteristics are reverse to the frequency characteristics of the crystal resonator 80. A temperature compensation capacitor is an example of such a reverse characteristics circuit.

As shown in FIG. 3, an indirect FM modulation circuit 86 is connected to the direct FM modulation circuit 76. An ID recognition signal wave fs0 is inputted into the above-mentioned indirect FM modulation circuit 86 from an ID recognition signal generation circuit 88. The indirect FM modulation circuit 86 is connected to a composite carrier wave transmission output circuit 90. Antenna wires 92a and 92b are provided in the above-mentioned composite carrier wave transmission output circuit 90. As shown in FIG. 2, antenna wires 92a and 92b are mounted on the exterior periphery of the tool holder 18, being surrounded by a cover member 93.

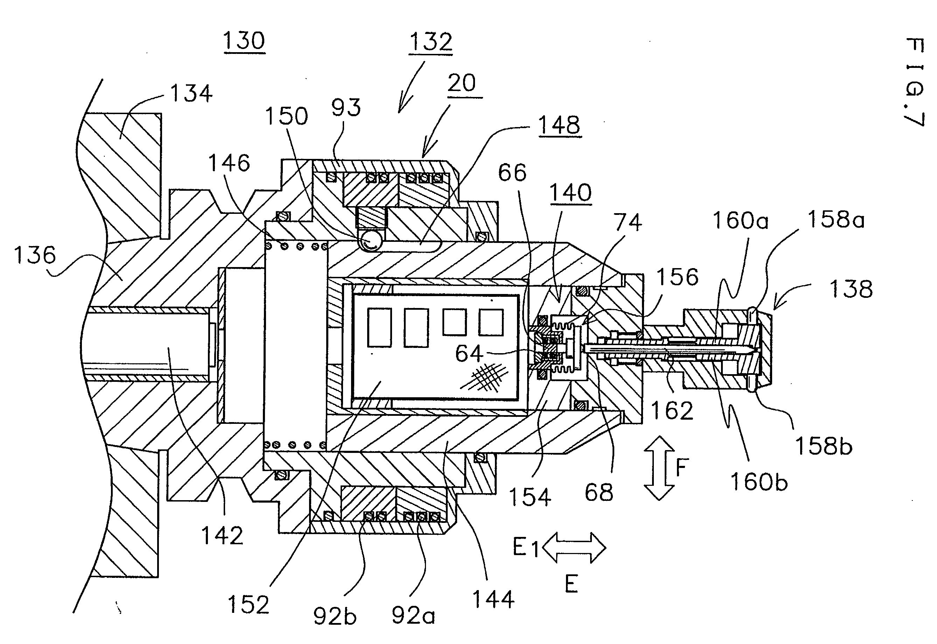

As shown in FIG. 6, the controller 22 comprises antenna wires 94a and 94b for receiving electromagnetic waves transmitted from the antennas 92a and 92b for the transmission/reception device 20. A fundamental electromagnetic wave reception device 96 for receiving a fundamental electromagnetic wave f1 and a higher-degree higher harmonic wave reception device 98 for receiving higher-degree higher harmonic wave fn are connected to the above-mentioned antenna wires 94a and 94b. The fundamental electromagnetic wave reception device 96 and the higher-degree higher harmonic wave reception device 98 are connected to frequency conversion circuits 100 and 102, respectively. Signals are inputted into the above-mentioned frequency conversion circuits 100 and 102 from local oscillation circuits 104 and 106, respectively, for the purpose of generating low-frequency waves.

Intermediate frequency amplification circuits 108 and 110 are connected to the frequency conversion circuits 100 and 102, respectively. Wave detection circuit demodulators 112 and 114 are connected to the intermediate frequency amplification circuits 108 and 110, respectively. The wave detection circuit demodulators 112 and 114 separate carrier waves from signal waves and transmit respective carrier waves to received signal input recognition circuits 116 and 118, respectively; and transmit respective signal waves to an ID recognition signal circuit 120 and a counter circuit 122, respectively. The received signal input recognition circuits 116 and 118 transmit to a gate switch circuit 124 such signals as indicate whether or not respective carrier waves have been inputted. The above-mentioned gate switch circuit 124 transmits recognition signals to an operation switch processing circuit 126 only when input signal are transmitted from both of the above-mentioned received signal input recognition circuits 116 and 118.

An explanation will be given below regarding the operation of the machine tool 10 which relates to the first embodiment and which is constructed as described above

Driving signals are inputted into the driving device 32 when signals are transmitted form the controller 20 to the transmission/reception device 20 by means of electromagnetic waves through the antenna wires 694a and 94b. On account of the above, the electric motor 36 is set in rotating motion, then the rotating speed of the above-mentioned electric motor 36 is significantly reduced by the speed reducer as shown in FIG. 2, and thereupon the driving adapter 42 that is linked to the output shaft 40 of the speed reducer 38 is set rotating. Then the tapered driving shaft 48 that engages with the driving adapter 48 44 by means of the pin 46 inserted through the slit 44 are set in rotating motion, and thereafter the rollers 50 that are in sliding contact with the exterior peripheral surface of the above-mentioned driving shaft 48 are set rotating.

The rollers 50 are in sliding contact with the exterior peripheral surface of the driving shaft 48 such that the rollers 50 are circumferentially inclined. The rolling of the rollers 50 causes the power unit 54 to radially expand or contract (in the direction of the arrow C) within given limits. When the power unit 54 expands or contracts in the direction of the arrow C, the sensor 62 is activated, and displacements of the above-mentioned power unit 54, namely displacements of the correction head 30, are transmitted by means of electromagnetic waves.

In specific terms, two carrier waves (such as foo) are generated simultaneously by the oscillation circuit 78, and a modulated wave on which is modified a signal wave fo obtained from the sensor 62 is transmitted from the direct FM modulation circuit 76 to the indirect FM modulation circuit 86. Furthermore, an ID recognition signal wave fs1 is inputted into the indirect FM modulation circuit 86. The above-mentioned ID recognition signal wave fs1 is inputted into the composite wave transmission output circuit 90 from the above-mentioned indirect FM modulation circuit 86. The composite wave transmission output circuit 90 transmits a fundamental electromagnetic wave f1 and a higher-degree higher harmonic wave fn to the controller 22 from the antenna wires 92a and 92b through the antenna wires 94a and 94b.

As shown in FIG. 6, the controller 22 transmits the fundamental electromagnetic wave f1 received through the antenna wires 94a and 94b to the fundamental electromagnetic wave reception device 96, and moreover transmits the higher-degree higher harmonic wave fn to the higher-degree higher harmonic wave reception device 98. The fundamental electromagnetic wave reception device 96 and the higher-degree higher harmonic wave reception device 98 serve to input the fundamental electromagnetic wave f1 and the higher-degree higher harmonic wave fn, respectively, into the frequency modulation circuits 100 and 102, respectively. Moreover, signals are inputted into the frequency modulation circuits 100 and 102 from the local oscillation circuits 104 and 106 for the purpose of generating low frequencies.

Furthermore, pertinent signals are transmitted from the intermediate frequency amplification circuits 108 and 110 to the wave detection circuit demodulators 112 and 114, respectively, The wave detection circuit demodulators 112 and 114 separate carrier waves from signal waves, and transmit respective carrier waves to the received signal input recognition circuits 116 and 118, respectively. Moreover, the wave detection circuit demodulators 112 and 114 transmit respective signal waves to the ID recognition signal circuit 120 and the counter circuit 122, respectively. The received signal input recognition circuits 116 and 118 transmit to the gate switch circuit 124 such signals as indicate whether or not respective carrier waves have been inputted. The gate switch circuit 124 transmits recognition signals to the operation switch processing circuit 126 only when input signal are transmitted from both of the above-mentioned received signal input recognition circuits 116 and 118.

In this regard, in the case of the first embodiment, two carrier waves each having a distinct frequency are transmitted from the transmission/reception device 20 to the control 22, and recognition signals are transmitted to the operation switch processing circuit 126 only when the gate switch judges that the above-mentioned two carrier waves have been inputted. Such being the case, a desirable effect is obtained in that the first embodiment is not affected by phenomena such as disturbances and therefore it is possible to reliably prevent erroneous operations from occurring, thereby enhancing reliability.

In specific terms, the crystal resonator 80, which is a component of the oscillation circuit 78, has a fundamental frequency, which is an undamped natural frequency, and besides, by way of characteristics, the crystal resonator 80 also has a plurality of frequencies that are equal to the above-mentioned fundamental frequency multiplied by integers (frequencies of higher harmonic waves). On account of the above, a fundamental carrier wave having a fundamental frequency and a plurality of carrier waves having higher harmonic frequencies can be taken out of the sole crystal resonator 80. For example, in the event that a frequency of 30 MHZ is used for a fundamental carrier wave and a frequency of 60 MHZ is used for a higher harmonic wave, then the gate switch circuit 124 opens only when both of the above-mentioned waves are received. It is normally inconceivable that the gate switch 124 opens on account of the occurrence of phenomena such as disturbances.

On the basis of the above, the first embodiment has the advantage that since radio communication is carried out by using two carrier waves and an AND circuit, erroneous operations are prevented as far as possible, thus drastically improving the reliability of radio communication. Moreover, another desirable effect is achieved in that since the use of the sole crystal resonator 80 can cause two or more carrier waves to be generated simultaneously, the construction of the oscillation circuit 78 can be effectively simplified, thereby leading to economization.

Furthermore, the oscillation circuit 78 comprises a reverse characteristics circuit, whose characteristics are reverse to the frequency characteristics of the crystal resonator 80. For example, the oscillation circuit 78 comprises the temperature compensation circuit 82, which is a temperature compensation capacitor. For instance, with respect to temperature variations from -10°C to 50°C, it is possible to curb frequency variations to between 3 PPM and 5 PPM. Therefore, since frequency variations corresponding to a frequency of 30 MHz is between 90 Hz and 150 Hz, it possible to obtain stable oscillation frequencies with respect to temperature variations, thus bringing about a desirable effect in that very small temperature variations can be accurately coped with.

Furthermore, the tool holder 18 and the controller 22 carry out radio communication with each other by means of electromagnetic waves. The above-mentioned controller 22 drives and controls the DC electric motor 36, by the so-called the answerback method, on the basis of the information received from the sensor 62, which is a component of the detection device 34 for the above-mentioned tool holder 18. Such being the case, a desirable effect is brought about in that the correction head 30 is capable of carrying out correction work with high accuracy and in a reliable manner.

FIG. 7 is a longitudinal sectional illustration of a tool holder 132, which is a component of a machine tool 130 relating to the second embodiment of the present invention. The above-mentioned tool holder 132 has, at one end, a shank portion 136 that is fitted into a spindle 134. At the other end of the tool holder 132 is mounted a measuring head 138 (by way of a tool) for measuring operational conditions of a workpiece to be machined. The above-mentioned tool holder 132 includes a battery (a DC power supply) 142 and a detection device 140 for detecting displacements as measured by the measuring head 138.

A sliding housing 144 is fitted into the middle part of the tool holder 132 in such a way that advancing and retracting are permitted to be performed freely along the axis (in the direction of the arrow E) with a spring 146 interposed between the sliding housing 144 and the shank portion 136. On the exterior periphery of the sliding housing 144 is longitudinally formed a guide groove 148 having a given length. A ball 150 is fitted into the guide groove 150. Inside the sliding housing 144 is placed a substrate 152 on which are mounted parts for radio transmission/reception. Moreover, in the front part of the slide housing 144 is contained the detection device 140.

The detection device 140 comprises a displacement detection sensor 156 which is a linear sensor and which is retained by a fixed cylindrical body 154. The sensor 156 is constructed similarly to the sensor 62 in the first embodiment, and therefore, identical components are denoted by identical reference symbols, with detailed explanations omitted.

The measuring head 138 comprises measuring pins (probes) 158a and 158b capable of freely advancing and retracting radially (in the direction of the arrow F), namely, in the direction perpendicular to the axis. The measuring pins 158a and 158b are fixed to contact levers 160a and 160b, respectively. The contact levers 160a and 160b extend in the direction of the arrow E. Moreover, at one end of each of the contact levers 160a and 160b is provided a contact point such that one contact point faces the other. Between the contact levers 160a and 160b is placed a shaft 162 such that advancing and retracting are permitted to be freely performed. One end of the shaft 162 engages with the above-mentioned contact points. On the other hand, the other end of the shaft 162 is in contact with the contact portion 68 that is a component of the sensor 156.

A rough explanation will be given below regarding the operation of the machine tool 130 which relates to the second embodiment and which is constructed as described above. With the tool holder 132 mounted on the spindle 134, the sensor 156 becomes activated by means of driving signals received from the controller 22. Then the tool holder 132 is moved to a position in alignment with a given machined hole in a workpiece that is not shown, and the measuring head 138 is inserted into the machined hole. The measuring pins 158a and 158 b come into contact with the interior wall of the machined hole and advance/retract in the direction of the arrow F, with the result that the contact points of the contact levers 160a and 160b exert pressure on the shaft 162.

Accordingly, in the event that the diameter of the workpiece is small enough, the shaft 162 moves in the direction of the arrow E1 shown in FIG. 7 and presses the contact portion 68 of the sensor 156 toward the coil 64, thereby permitting the measuring head 138 to yield measured values. Just as in the case of the first embodiment, such measured values are carried by a fundamental electromagnetic wave f1 and a higher-degree higher harmonic wave fn and transmitted from the antenna wires 92a and 92b through the antenna wires 94a and 94b, respectively. Accordingly, in the case of the second embodiment, an effect similar to that in the first embodiment can be obtained.

It this connection, in the second embodiment is used the measuring head 138 that serves to measure diameters of machined holes in workpieces. However, the type of a measuring head is not limited to the above, but it is possible to use, for example, heads for measuring hole depths or shapes (not shown).

### Possibility of Industrial Utilization

In the case of the machine tool and the method of communication therefor relating to the present invention, radio communication is carried out between a controller and a transmission/reception device by means of electromagnetic waves, and moreover, the judgment of signal waves is made only when a plurality of electromagnetic waves each of which is a carrier wave having a distinct frequency and on which are modulated given signals are simultaneously received by a reception device from a transmission device. Such being the case, a gate is opened only when a plurality of carrier waves are simultaneously inputted, and therefore, the above-mentioned machine tool is not affected by phenomena such as disturbances, thus erroneous operations are reliably prevented, thereby enhancing reliability.

## Claims

1. A machine tool comprising:
a holder to which a tool is fixed;
a transmission/reception device provided in said holder; and
a controller electromagnetically carrying out radio communication with said transmission/reception device: wherein
a reception device is provided with
an oscillation circuit simultaneously generating a plurality of carrier waves each having a distinct frequency;
a modulation circuit modulating signal waves on said plurality of carrier waves; and
a first antenna transmitting to a reception device a plurality of electromagnetic waves each modulating said signal waves on one of said plurality of carrier waves:
and wherein
said reception device is provided with a second antenna receiving each of said electromagnetic waves transmitted; and
a gate switch permitting said signal waves to be judged only when said plurality of carriers are simultaneously received.

2. A machine tool as defined in claim 1, wherein
said oscillation circuit comprises:
a single crystal resonator taking out not only a fundamental frequency but also frequencies of higher harmonic waves.

3. A machine tool as defined in claim 1 or 2, wherein
said oscillation circuit comprises:
a crystal resonator; and
a reverse characteristics circuit having characteristics reverse to the frequency characteristics of said crystal resonator.

4. A machine tool as defined in claim 1, wherein
a detection device for detecting given operational conditions of said holder is included in said holder, and
detection signal waves received from said detection device are modulated on said plurality of carrier waves by said modulation circuit.

5. A machine tool as defined in claim 4, having said holder that is so constructed as to be readily mounted on and removed from a spindle, wherein
said holder comprises a compensation head capable of adjusting the position of said tool in the direction of the radius of said spindle, and a rotary driving source for driving said compensation head;
said detection device has a sensor for detecting the manner of detection of said compensation head; and
said detection device is so constructed as to be capable of transmitting the information detected by said sensor to said controller by means of electromagnetic waves.

6. A machine tool as defined in claim 4, wherein
said holder comprises, by way of a tool, a measuring head for detecting machining conditions of a workpiece;
said detection device has a sensor for detecting the operational conditions of said measuring head; and
said detection device is so constructed as to be capable of transmitting the information detected by said sensor to said controller by means electromagnetic waves.

7. A method of carrying out machine tool communication between an external controller and a holder to which a tool is fixed, wherein a transmission device comprises:
a process whereby a plurality of carrier waves each having a distinct frequency are simultaneously generated;
a process whereby a plurality of electromagnetic waves each modulating said signal waves on one of said plurality of carrier waves are transmitted to a reception device;
a process whereby judgment is made as to whether or not said plurality of carrier waves are simultaneously received by said reception device; and
a process whereby judgment is made only when said plurality of carrier waves are simultaneously received.

8. A method of carrying out machine tool communication as defined in claim 7, wherein not only a fundamental frequency but also frequencies of higher harmonic waves are taken out of a single crystal resonator,
and electromagnetic waves having said frequencies are used as said plurality of carrier waves.

9. A method of carrying out machine tool communication as defined by claim 7, wherein said plurality of carrier waves are simultaneously transmitted by said crystal resonator, and
temperature compensation is carried out by means of a reverse characteristics circuit having characteristics reverse to the frequency characteristics of said crystal

10. A method of carrying out machine tool communication as defined in claim 7, wherein a machine tool comprises:
a process whereby a given manner of operation of said holder is detected by means of a detection device contained in said holder; and
a process whereby detection signal waves transmitted from said detection device are modulated on said plurality of carrier waves.
